# EUROPÄISCHE PATENTSCHRIFT

(11) **EP 0 453 606 B1**
(45) Veröffentlichungstag und Bekanntmachung des Hinweises auf die Patenterteilung: **07.09.1994**
(21) Anmeldenummer: 90108054.9
(22) Anmeldetag: 27.04.1990
(51) Int. Cl.: H04L 12/56

(54) **Verfahren und Schaltungsanordnung zur Reduzierung des Verlustes von Nachrichtenpaketen, die über eine Paketvermittlungseinrichtung übertragen werden**
Method and circuit arrangement for reducing the loss of information packets transmitted through a packet switch
Méthode et dispositif pour réduire la perte de paquets d'information, transmis par un commutateur de paquets

(43) Veröffentlichungstag der Anmeldung: 30.10.1991
(73) Patentinhaber: SIEMENS AKTIENGESELLSCHAFT, 80333 München (DE)
(72) Erfinder: Foglar, Andreas, Dipl.-Phys., D-8000 München 60 (DE); Rau, Peter, Dr.-Dipl.-Phys., D-8000 München 60 (DE)

(56) Entgegenhaltungen:
- EP-A- 0 321 050
- IEEE INFOCOM 88, März 1988, IEEE, New York, US, Seiten 19-28; P.NEWMAN: "A Broad-Band Packet Switch for Multi-Service Communications"
- TELCOM REPORT, vol. 13, no. 1, 1990, MUNCHEN, DE, Seiten 4-7; H. SCHNEIDER: "Mit ATM zur bitratenvariablen Kommunikation"

## Beschreibung

Die Erfindung betrifft ein Verfahren und eine Schaltungsanordnung zum Weiterleiten von auf Zubringerleitungen im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache aufweisende Paketvermittlungseinrichtung zu mit dieser verbundenen Abnehmerleitungen hin, wobei für jedes der auf einer der Zubringerleitungen im Zuge einer virtuellen Verbindung übertragenen Nachrichtenpakete durch Vermehrfachen eine Nachrichtenpaket-Gruppe mit einer der Anzahl der redundanten Koppelvielfache entsprechenden Anzahl von identischen Nachrichtenpaketen gebildet wird, und wobei jedem der Nachrichtenpakete einer Nachrichtenpaket-Gruppe eine identische, für aufeinanderfolgende Nachrichtenpaket-Gruppen sich ändernde Zusatzkennung beigefügt wird, und die Nachrichtenpakete einer Nachrichtenpaket-Gruppe getrennt überdie redundanten Koppelvielfache in Richtung zu der für die jeweilige virtuelle Verbindung in Frage kommenden Abnehmerleitung hin übertragen werden, und wobei nach einer solchen Übertragung über die redundanten Koppelvielfache anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung weitergeleitet wird.

Ein solches Verfahren und eine solche Schaltungsanordnung sind bereits in der Europäischen Patentanmeldung 89103798.8 (= EP-A- 0 384 936, veröffentlicht am 05.09.90) vorgeschlagen worden.

Bei diesem Verfahren oder dieser Schaltungsanordnung kann es bei einer fehlerhaften Übertragung eines Nachrichtenpaketes zu einem Verlust eines gesamten Nachrichtenpaket-Zyklus, der beispielsweise eine Anzahl von 64 Nachrichtenpaketen umfassen kann, kommen.

Die Erfindung stellt sich nun die Aufgabe, ein Verfahren und eine Schaltungsanordnung der eingangs genannten Art anzugeben, das den möglichen Verlust von Nachrichtenpaketen reduziert.

Gelöst wird die vorstehend aufgezeigte Aufgabe bei einem Verfahren der eingangs genannten Art erfindungsgemäß dadurch, daßjeweils das als erstes einer Nachrichtenpaket-Gruppe fehlerfrei übertragene Nachrichtenpaketweitergeleitetwird, und daß fehlerfrei übertragene Nachrichtenpakete, die auf ein fehlerhaft übertragenes Nachrichten paket folgen, zwischengespeichert werden, bis ein von einem jeweils langsameren Koppelvielfach fehlerfrei übertragenes Nachrichtenpaket, das der gleichen Nachrichtenpaket-Gruppe angehört wie das fehlerhaft übertragene Nachrichtenpaket, weitergeleitet worden ist, wonach die zwischengespeicherten Nachrichtenpakete in schneller Folge weitergeleitet werden. Dieses Verfahren bringt den Vorteil mit sich, daß nach Warten auf ein Nachrichtenpaket von einem jeweils langsameren Koppelvielfach das Ausbleiben eines nachfolgenden Nachrichtenpaketes nicht zum Verlust zumindest dieses Nachrichtenpaketes führen muß, obwohl es über ein jeweils schnelleres Koppelvielfach bereits übertragen wurde. Bei diesem Verfahren wird über das jeweils am schnellsten übertragende Koppelvielfach übertragen, so daß einerseits der Jitter und andererseits die Laufzeit in der Vermittlungseinrichtung minimiert wird. Dieses Verfahren läßt eine Verringerung des Verlustes von Nachrichtenpaketen gegenüber dem bereits vorgeschlagenen Verfahren um 3 bis 5 Größenordnungen erwarten.

In weiterer Ausgestaltung dieses Verfahrens bilden eine festgelegte Anzahl von aufeinander folgenden Nachrichtenpaketen einen Nachrichtenpaket-Zyklus und jedes zwischengespeicherte Nachrichtenpaket wird spätestens nach einer Zeit, die der minimalen Übertragungsdauer eines Nachrichtenpaket-Zyklus entspricht, weitergeleitet.

Diese Maßnahme bringt den Vorteil mit sich, daß Uneindeutigkeiten zwischen Nachrichtenpaketen mit jeweils gleicher Zusatzkennung von jeweils aufeinanderfolgenden Nachrichtenpaket-Zyklen vermieden werden.

Eine Schaltungsanordnung zur Durchführung des Verfahrens der eingangs genannten Art weist für jede Zubringerleitung eine Behandlungseinrichtung und für jede Abnehmerleitung eine Auswerteeinrichtung auf, wobei diese Schaltungsanordnung erfindungsgemäß dadurch gekennzeichnet ist, daß von der jeweiligen Auswerteeinrichtung Nachrichtenpakete, die jeweils als erste ihrer Nachrichtenpaket-Gruppe fehlerfrei übertragen sind, weitergeleitet sind und daß fehlerfrei übertragene Nachrichtenpakete, die auf die fehlerhafte Übertragung eines Nachrichtenpaketes aufeinanderfolgen, in einem Zwischenspeicher abgelegt sind, und daß ein von einem jeweils langsameren Koppelvielfach fehlerfrei übertragenes Nachrichtenpaket, das der gleichen Nachrichtenpaket-Gruppe angehört wie das fehlerhaft übertragene Nachrichtenpaket, auf die jeweilige Abnehmerleitung weitergeleitet ist und daß die in dem Zwischenspeicher abgelegten Nachrichtenpakete auf die jeweilige Abnehmerleitung in der gleichen Reihenfolge, in der sie in dem Zwischenspeicher abgelegt sind, weitergeleitet sind.

Diese Schaltungsanordnung bringt den Vorteil eines geringen schaltungstechnischen Aufwands für die Weiterleitung von Nachrichtenpaketen über die redundant ausgelegte Paketvermittlungseinrichtung mit sich.

In weiterer Ausgestaltung dieser Schaltungsanordnung bilden eine Anzahl von aufeinanderfolgenden Nachrichtenpaketen einen Nachrichtenpaket-Zyklus und jedes zwischengespeicherte Nachrichtenpaket wird spätestens nach einer Zeit, die der minimalen Übertragungsdauer eines Nachrichtenpaket-Zyklus entspricht, aus dem Speicher ausgelesen und weitergeleitet.

Eine solche Schaltungsanordnung bringt den Vorteil mit sich, daß Uneindeutigkeiten zwischen Nachrichtenpaketen mit jeweils gleicher Zusatzkennung, die jeweils aufeinanderfolgenden Nachrichtenpaket-Zyklen zugehören, vermieden werden.

Im folgenden wird nun die Erfindung im zum Verständnis erforderlichen Umfang anhand von Zeichnungen beispielhaft näher erläutert.
FIG 1 zeigt ein Blockschaltbild einer Paketvermittlungseinrichtung PVE, bei der die Erfindung angewandt ist und
FIG 2 zeigt einen möglichen Aufbau einer Auswerteeinheit AWE, bei der das erfindungsgemäße Verfahren realisiert ist.

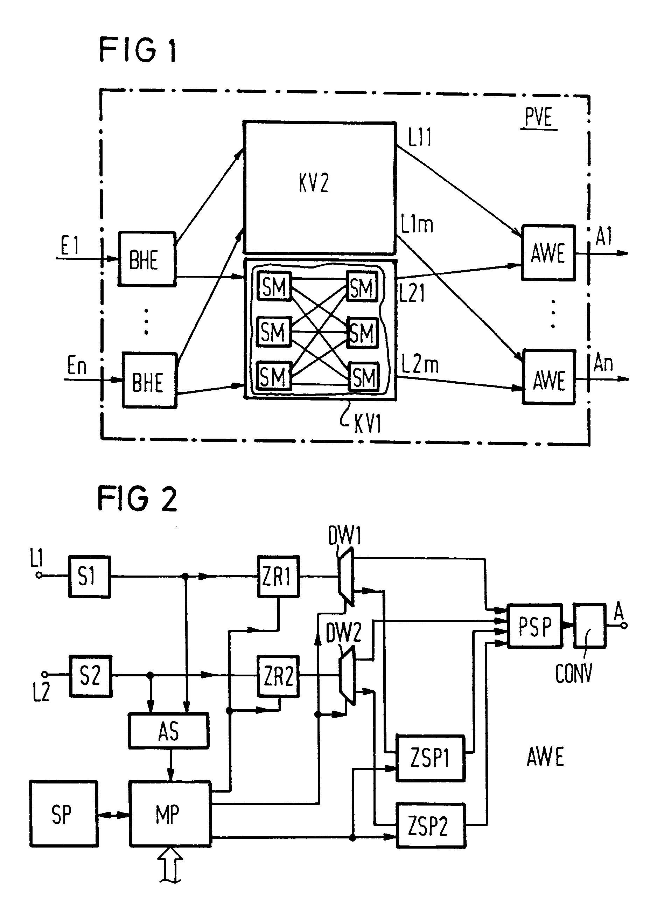

In FIG 1 ist eine Paketvermittlungseinrichtung PVE schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 und An dargestellt. Auf den Zubringerleitungen und Abnehmerleitungen erfolgt jeweils eine Übertragung von Nachrichtenpaketen im Zuge von virtuellen Verbindungen nach einem asynchronen Übertragungsverfahren ("Asynchronous Transfer Mode"). Bei den Nachrichtenpaketen möge es sich um Pakete fester Länge handeln, welche jeweils über einen Paketkopf mit einer jeweiligen virtuellen Kanalnummer sowie einen Informationstei verfügen. Die jeweilige virtuelle Kanalnummer, die mit VCI bezeichnet wird, legt entsprechend der virtuellen Verbindung fest, zu welcher in Frage kommenden Abnehmerleitung Ahin das jeweilige Nachrichtenpaket übertragen wird. In dem Informationsteil erfolgt die Übertragung der eigentlichen Nachrichtensignale. Unter Nachrichtensignale sollen dabei Daten und Textsignale sowie Sprach- bzw. Bildsignale in digitaler Form verstanden werden. Weiter kann vorgesehen sein, daß den Nachrichtenpaketen jeweils eine Prüfinformation angefügt ist, die mit der voranstehenden Signalzustandsfolge des jeweiligen Nachrichtenpaketes gebildet ist.

Wie aus FIG 1 hervorgeht, ist jeder der Zubringerleitungen E1 bis En eine Behandlungseinrichtung BHE zugeordnet. Diese Behandlungseinrichtung BHE, die beispielsweise durch eine in der EP-A 89103798.8 vorgeschlagene Behandlungseinrichtung gegeben sein kann, fügt den über die jeweilige Zubringerleitung E übertragenen, einer virtuellen Verbindung zugehörigen Nachrichtenpaketen jeweils eine für aufeinanderfolgende Nachrichtenpakete der jeweiligen virtuellen Verbindung sich ändernde Zusatzkennung bei. Die Zusatzkennung besteht aus einer Folgenummer, die für jede virtuelle Verbindung individuell im Zuge des Verbindungsaufbaus auf einen festgelegten Anfangswert gesetzt und für jedes aufeinanderfolgende Nachrichtenpaket inkrementiert wird. Eine Anzahl von beispielsweise 64 aufeinanderfolgenden Nachrichtenpaketen kann einen Nachrichtenpaket-Zyklus bilden. Die Folgenummer kann dann vorzugsweise eine Anzahl von Zuständen einnehmen, die der Anzahl entspricht, die ein Nachrichtenpaket-Zyklus Nachrichtenpakete umfaßt. Die Behandlungseinrichtung BHE bildet aus den um die Zusatzkennung ergänzten Nachrichtenpaketen zwei gleiche Nachrichtenpakete, die im folgenden als Nachrichtenpaket-Gruppe bezeichnet werden, und leitet diese zwei redundanten Koppelvielfachen KV1 und KV2 der Paktvermittlungseinrichtung PVE zu. In FIG 1 ist anhand des Koppelvielfachen KV1 schematisch angedeutet, daß die beiden Koppelvielfache KV jeweils eine Mehrzahl untereinanderverbundener Schaltermodule SM aufweisen mögen. Da der Aufbau und die Wirkungsweise derartiger Koppelvielfache KV bereits bekannt ist, wird im folgenden darauf nicht näher eingegangen.

Jedes der Koppelvielfache KV weist eine Mehrzahl von Ausgangsleitungen L11...L1 m, L21...L2m auf. Dabei sind jeweils eine Ausgangsleitung L1 des Koppelfachen KV1 und eine Ausgangsleitung L2 des Koppelvielfachen KV2 gemeinsam einer gesonderten Auswerteeinrichtung AWE zugeführt. Diese Auswerteeinrichtungen AWE sind mit jeweils einer der Abnehmerleitungen A1 bis An verbunden. Eine solche Auswerteeinrichtung AWE übernimmt die über die beiden Koppelvielfache KV übertragenen Nachrichtenpakete und gibt durch ein im folgenden noch näher eräutertes Auswerten der den Nachrichtenpaketen jeweils beigefügten Zusatzkennung lediglich eines der zu einer Nachrichtenpaket-Gruppe gehörenden Nachrichtenpakete an die zugeordnete Abnehmerleitung A ab.

Bezüglich der gerade erläuterten Paketvermittlungseinrichtung PVE sei noch darauf hingewiesen, daß diese zwar gemäß FIG 1 zwei redundante Koppelvielfache aufweist. Die Anzahl der redundanten Koppelvielfache kann jedoch auch in Abhängigkeit von der Ausfallwahrscheinlichkeit jedes der Koppelvielfache KV und der geforderten Werte für die Verfügbarkeit der Paketvermittlungseinrichtung PVE entsprechend erhöht sein.

In FIG 2 ist ein möglicher Aufbau, der in FIG 1 dargestellten Auswerteeinrichtung AWE angegeben. Die über die jeweiligen Ausgangsleitungen L1, L2 übertragenen Nachrichtenpakete einer Nachrichtenpaket-Gruppe durchlaufen zunächst jeweils mit S1 und S2 bezeichnete Schnittstelleneinrichtungen. In diesen Schnittstelleneinrichtungen erfolgt jeweils die Erkennung des Beginns eines Nachrichtenpaketes und die Synchronisierung von empfangenen Nachrichtenpaketen mit dem Systemtakt, mit dem die Auswerteeinrichtung AWE angesteuert wird. Weiter erfolgt in diesen Schnittsteiieneinrichtungen jeweils eine Überprüfung der übertragenen Nachrichtenpakete hinsichtlich einer fehlerfreien Übertragung, wobei für den Fall, daß den Nachrichtenpaketen jeweils eine Prüfinformation beigefügt ist, eine Überprüfung anhand dieser Prüfinformation hinzutreten kann. Liegt eine solche fehlerfreie Übertragung vor, so wird von der Schnittstelleneinrichtung S1 das gerade überprüfte Nachrichtenpaket einem Zwischenregister ZR1 zugeführt. In entsprechender Weise führt die Schnittstelleneinrichtung S2 bei einer fehlerfreien Übertragung das gerade überprüfte Nachrichtenpaket einem Zwischenregister ZR2 zu. Von jedem fehlerfrei übertragenen Nachrichtenpaket wird der Paketkopf, der jeweils eine der jeweiligen virtuellen Verbindung zugehörige Kanalnummer VCI und eine von der eingangsseitigen Behandlungseinrichtung BHE der Paketvermittlungseinrichtung PVE fortlaufend vergebene Folgenummeraufweist, zusätzlich einer Auswahischaitung AS zugeführt. Der jeweilige Paketkopf wird von der Auswahlschaltung AS einer Steuereinrichtung MP, die beispielsweise mit einem Mikroprozessor gebildet sein kann und die, wie mit einem unterbrochenen Pfeil angedeutet, mit einer nicht näher dargestellten, übergeordneten Steuerung der Paketvermittlungseinrichtung PVE verbunden ist, zugeführt. Die in dem jeweiligen Paketkopf enthaltene virtuelle Kanalnummer VCI wird einem Speicher SP zugeführt und dient dort der Adressierung einer Mehrzahl von Speicherzellen, in denen unter anderem die verbindungsindividuelle Folgenummer abgelegt ist, die im Zuge des Aufbaus der jeweiligen virtuellen Verbindung auf einen festgelegten Anfangswert gesetzt wird. Der Speicherinhalt der jeweiligen adressierten Speicherzellen wird in die Steuereinrichtung MP übernommen und die Folgenummer des gerade in Arbeit stehenden Nachrichtenpaketes mit der jeweiligen Folgenummer aus den verbindungsindividuellen Speicherplätzen verglichen.

Stellt die Steuereinrichtung MP fest, daß die jeweilige von der Auswahlschaltung AS zugeführte Folgenummer die nächstfolgende Folgenummer auf das zuletzt weitergeleitete Nachrichtenpaket ist, so bewirkt die Steuereinrichtung MP anhand einer von der Auswahlschaltung AS mit dem Paketkopf mitgeführten Zusatzinformation W, die angibt, von welchem Koppelvielfach KV das jeweilige Nachrichtenpaket übertragen wurde, die Weiterleitung des jeweiligen Nachrichtenpaketes aus dem betreffenden Zwischenregister ZR1, ZR2 über eine jeweilige Datenweiche DW1, DW2 in einen Pufferspeicher PSP.

Stellt die Steuereinrichtung MP fest, daß das gerade in Arbeit stehende Nachrichtenpaket eine Folgenummer aufweist, für die innerhalb eines Nachrichtenpaket-Zyklus bereits ein Nachrichtenpaket aus einem ZwischenregisterZR1, ZR2 weitergleitetwurde, so wird dieses Nachrichtenpaket als Kopie eines bereits weitergeleiteten Nachrichtenpaketes betrachtet und wird nicht aus dem ZwischenregisterZR1, ZR2 weitergeleitet, wobei es von einem jeweils nachfolgenden Nachrichtenpaket überschrieben wird.

Stellt die Steuereinrichtung MP dagegen fest, daß die jeweilige von der Auswahlschaltung AS zugeführte Folgenummer eine der nächstfolgenden Folgenummer nachfolgende Folgenummer ist, so bewirkt die Steuereinrichtung MP, daß das gerade in Arbeit stehende Nachrichtenpaket aus dem jeweiligen Zwischenregister ZR1, ZR2 über die zugehörige Datenweiche DW1, DW2 in einem Zwischenspeicher ZSP1, ZSP2 gespeichert wird. Die Steuereinrichtung MP bewirkt dabei die Abspeicherung der Folgenummer des jeweiligen fehlerhaften Nachrichtenpaketes für die jeweilige virtuelle Verbindung in dem Speicher SP.

Für jedes, aus dem Zwischenregister ZR weitergeleitete Nachrichtenpaket wird in dem Speicher SP, mit der virtuellen Kanalnummer VCI als Adresse, die dem jeweils übertragenen Nachrichtenpaket entsprechende Folgenummer in den verbindungsindividuellen Speicherzellen abgespeichert; dabei kann die jeweilige Folgenummer inkrementiert sein, wodurch sich die Feststellung des jeweiligen nächstfolgenden Nachrichtenpaketes auf einen Vergleich der jeweiligen Folgenummern beschränkt. Bei dieser Vorgehensweise ist ein Nachrichtenpaket, das jeweils nächstfolgende Nachrichtenpaket auf das zuletzt weitergeleitete Nachrichtenpaket, wenn ein Vergleich der von dem gerade übertragenen Nachrichtenpaket mitgeführten Folgenummer mit der Folgenummer, die zuletzt für die jeweilige virtuelle Verbindung in den Speicher SP abgelegt wurde, Übereinstimmung ergibt.

Wird nun das jeweilige fehlerhafte Nachrichtenpaket von einem jeweils langsameren Koppelvielfach KV fehlerfrei übertragen, so wird dieses Nachrichtenpaket über die Datenweiche DW1, DW2 direkt an den Pufferspeicher PSP weitergeleitet und die der jeweiligen virtuellen Verbindung zugehörigen zwischengespeicherten Nachrichtenpakete werden in schneller Folge, beginnend mit dem am längsten in dem jeweiligen Zwischenspeicher ZSP verweilenden Nachrichtenpaket an den Pufferspeicher PSP weitergeleitet.

Der Pufferspeicher PSP leitet die aufgenommenen Nachrichtenpakete in der Reihenfolge ihres Einschreibens an die mit derjeweiligen AuswerteeinheitAWE verbundene Abnehmerleitung Aweiterwobei ereine Anpassung der innerhalb der Paketvermittlungseinrichtung PVE herrschenden Übertragungsgeschwindigkeit an die dergegenüber niedrigere Übertragungsgeschwindigkeit auf der jeweiligen Abnehmerleitung A bewirkt.

Bei diesem Weiterleiten durchlaufen die Nachrichtenpakete einen Umsetzer CONV, in dem die den Nachrichtenpaketen in der eingangsseitigen Behandlungseinrichtung BHE beigefügte Zusatzkennung entfernt wird.

Uneindeutigkeiten zwischen Nachrichtenpaketen mit gleichen Folgenummern von jeweils aufeinanderfolgenden Nachrichtenpaket-Zyklen können vermieden werden, indem unter Verzicht auf ein fehlerhaftes Nachrichtenpaket die nachfolgenden, zwischengespeicherten Nachrichtenpakete spätestens nach einer Dauer, die der minimalen Übertragungsdauer eines Nachrichtenpaket-Zyklus entspricht, an die betreffende Abnehmerleitung A weitergeleitet werden. Eine Überwachung der Verweildauer von zwischengespeicherten Nachrichtenpaketen in dem jeweiligen Zwischenspeicher ZSP1, ZSP2 kann beispielsweise dadurch erfolgen, daß zusammen mit der Folgenummer des jeweiligen fehlerhaften Nachrichtenpaketes ein Zähler auf einen Wert gesetzt wird, der der Anzahl von Nachrichtenpaketen entspricht, die in einem Nachrichten paket-Zyklus enthalten sind, wobei der Zähler in dem Takt, der der maximalen Nachrichtenpaket-Folgefrequenz entspricht, dekrementiertwird und bei Erreichen des minimalen Zählerstandes das Auslesen der zwischengespeicherten Nachrichtenpakete aus dem jeweiligen Zwischenspeicher ZSP1, ZSP2 bewirkt wird.

Die Zwischenspeicher ZSP können jeweils Nachrichtenpakete von unterschiedlichen virtuellen Verbindungen aufnehmen. Für unterschiedliche virtuelle Verbindungen kann jeweils ein anderes Koppelvielfach KV das jeweils schnellste Koppelvielfach KV sein. In dem Ausführungsbeispiel nach FIG 2 ist für jedes Koppelvielfach KV ein Zwischenspeicher ZSP vorgesehen.

Es sei hier jedoch ausdrücklich erwähnt, daß der Pufferspeicher PSP bei Verzicht auf die Zwischenspeicher ZSP1, ZSP2 so ausgebildet sein kann, daß die Nachrichtenpakete in der Reihenfolge in den Pufferspeicher PSP eingeschrieben werden, wie sie auf der betreffenden Abnehmerleitung A weitergeleitet werden sollen. Fehlt dabei ein Nachrichtenpaket, so wird auf dieses Nachrichtenpaket längstens für eine Zeit, die der minimalen Übertragungsdauer eines Nachrichtenpaket-Zyklus entspricht gewartet, daß es von einem jeweils langsameren Koppelvielfach KV übertragen wird, wobei das jeweilige fehlende Nachrichtenpaket, das rechtzeitig übertragen wurde, unverzüglich an die betreffende Abnehmerleitung Aweitergeleitet wird und die in dem Pufferspeicher PSP zwischengespeicherten Nachrichtenpakete in kürzest möglicher Folge an die betreffende Abnehmerleitung A weitergeleitet werden. Da die Nachrichtenpakete, die in der Reihenfolge vor dem fehlenden Nachrichtenpaket kommen, bereits übertragen werden können, ist bei dieser Ausführungsform für den Pufferspeicher PSP eine Speicherplatzzahl ausreichend, die der Anzahl von in einem Nachrichtenpaket-Zyklus enthaltenen Nachrichtenpakete entspricht.

Schließlich sei noch erwähnt, daß die Zwischenspeicher ZSP bzw. der Pufferspeicher PSP durch eine parallel zum eigentlichen Speicher liegende Warteschlange (register file) verwaltet werden können. In der Warteschlange werden dann die von den jeweiligen virtuellen Verbindungen belegten Speicherplätze gekennzeichnet. Ist das für eine jeweilige virtuelle Verbindung fehlende Nachrichtenpaket weitergeleitet, so werden die dieser virtuellen Verbindung zugehörigen zwischengespeicherten Nachrichtenpakete jeweils durch Setzen eines Markierungsbits zusätzlich gekennzeichnet, worauf die so gekennzeichneten Nachrichtenpakete beginnend mit dem am längstem zwischengespeicherten Nachrichtenpaket in kürzest möglicher Folge auf die betreffende Abnehmerleitung A weitergeleitet werden.

## Patentansprüche

1. Verfahren zum Weiterleiten von auf Zubringerleitungen (E1...En) im Zuge von virtuellen Verbindungen nach einem asynchronen Übertragungsverfahren übertragenen, eine die jeweilige virtuelle Verbindung bezeichnenden Paketkopf aufweisenden Nachrichtenpaketen über eine wenigstens zwei redundante Koppelvielfache (KV1, KV2) aufweisende Paketvermittlungseinrichtung (PVE) zu mitdieserverbundenen Abnehmerleitungen (A1...An) hin, wobei für jedes der auf einer der Zubringerleitungen (E1...En) im Zuge einer virtuellen Verbindung übertragenen Nachrichtenpaktete durch Vermehrfachen eine Nachrichtenpaket-Gruppe mit einer der Anzahl der redundanten Koppelvielfache (KV1, KV2) entsprechenden Anzahl von identischen Nachrichtenpaketen gebildet wird,
und wobei jedem der Nachrichtenpakete einer Nachrichtenpaket-Gruppe eine identische, für aufeinanderfolgende Nachrichtenpaket-Gruppen sich ändernde Zusatzkennung beigefügt wird, und die Nachrichtenpakete einer Nachrichtenpaket-Gruppe getrennt über die redundanten Koppelvielfache (KV1, KV2) in Richtung zu der für die jeweilige virtuelle Verbindung in Frage kommende Abnehmerleitung (A1...An) hin übertragen werden,
und wobei nach einer solchen Übertragung über die redundanten Koppelvielfache (KV1, KV2) anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung (A1...An) weitergeleitet wird,
dadurch gekennzeichnet,
daßjeweils das als erstes einer Nachrichtenpaket-Gruppe fehlerfrei übertragene Nachrichtenpaket weitergeleitet wird, und daß fehlerfrei übertragene Nachrichtenpakete, die auf ein fehlerhaft übertragenes Nachrichtenpaket folgen, zwischengespeichert werden, bis ein von einem jeweils langsameren Koppelvielfach (KV1, KV2) fehlerfrei übertragenes Nachrichtenpaket, das dergleichen Nachrichtenpaket-Gruppe angehört wie das fehlerhaft übertragene Nachrichtenpaket, weitergeleitet worden ist, wonach die zwischengespeicherten Nachrichtenpakete in schneller Folge weitergeleitet werden.

2. Verfahren nach Anspruch 2,
dadurch gekennzeichnet,
daß eine festgelegte Anzahl von aufeinanderfolgenden Nachrichtenpaketen einen Nachrichtenpaket-Zyklus bilden und daß jedes zwischengespeicherte Nachrichtenpaket spätestens nach einer Zeit, die der minimalen Übertragungsdauer eines Nachrichtenpaket-Zyklus entspricht, weitergeleitet wird.

3. Schaltungsanordnung zum Weiterleiten von auf Zubringerleitungen (E1...En) im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache (KV1, KV2) aufweisende Paketvermittlungseinrichtung (PVE) zu mit dieser verbundenen Abnehmerleitungen (A1...An) hin, wobei jeder der Zubringerleitungen (E1...En) eine Behandlungseinrichtung (BHE) zugeordnet ist, welche einerseits den über die jeweilige Zubringerleitung (E1...En) übertragenen Nachrichtenpakteten jeweils eine für aufeinanderfolgende Nachrichtenpakate sich ändernde Zusatzkennung beifügt und andererseits aus den um die Zusatzkennung ergänzten Nachrichtenpaketen jeweils eine Nachrichtenpaket-Gruppe mit einer der Anzahl der redundanten Koppelvielfache (KV1, KV2) entsprechenden Anzahl von identischen Nachrichtenpaketen bildet, die den redundanten Koppelvielfachen (KV1, KV2) zugeführt sind, und wobei jeder der Abnehmerleitungen (A1...An) eine Auswerteeinrichtung (AWE) zugeordnet ist, welche über die redundanten Koppelvielfache (KV1, KV2) übertragene Nachrichtenpakete aufnimmt und anhand der den Nachrichtenpaketen jeweils beigefügten Zusatzkennung und gegebenenfalls der von der Behandlungseinrichtung (BHE) her gerade bei der Bildung einer Nachrichtenpaket-Gruppe fürdiejeweilige virtuelle Verbindung benutzten, zur Verfügung stehenden Zusatzkennung lediglich eines der zu einer Nachrichtenpaket-Gruppe gehörenden Nachrichtenpakete an die zugeordnete Abnehmerleitung (A1...An) abgibt,
dadurch gekennzeichnet,
daß von der jeweiligen Auswerteeinrichtung (AWE) Nachrichtenpakete, die jeweils als erste ihrer Nachrichtenpaket-Gruppe fehlerfrei übertragen sind, weitergeleitet sind und daß Nachrichtenpakete, die auf die fehlerhafte Übertragung eines Nachrichtenpaketes aufeinanderfolgen, in einem Speicher (ZSP) abgelegt sind, und daß ein von einem jeweils langsameren Koppelvielfach (KV1; KV2) fehlerfrei übertragenes Nachrichtenpaket, das der gleichen Nachrichtenpaket-Gruppe angehört wie das jeweilige fehlerhaft übertragene Nachrichtenpaket, auf die jeweilige Abnehmerleitung (A1...An) weitergeleitet ist und daß die in dem Speicher (ZSP) abgelegten Nachrichtenpakete auf die jeweilige Abnehmerleitung (A1...An) in der gleichen Reihenfolge, in der sie in dem Speicher (ZSP) abgelegt sind, weitergeleitet sind.

4. Schaltungsanordnung nach Anspruch 5,
dadurch gekennzeichnet,
daß eine Anzahl von aufeinanderfolgenden Nachrichtenpaketen einen Nachrichtenpaket-Zyklus bilden und daß jedes zwischengespeicherte Nachrichtenpaket spätestens nach einer Zeit, die der minimalen Übertragungsdauer eines Nachrichtenpaket-Zyklus entspricht, aus dem Speicher (ZSP) ausgelesen und weitergeleitet ist.

## Claims

1. Method for forwarding information packets, which exhibit a packet header designating the respective virtual connection and which are transmitted in accordance with an asynchronous transfer method on offering trunks (E1...En) in the course of virtual connections, via a packet switch (PVE), which exhibits at least two redundant switching matrixes (KV1, KV2), towards serving trunks (A1...An) connected to this packet switch, in which method an information packet group with a number of identical information packets corresponding to the number of redundant switching matrixes (KV1, KV2) is formed by multiplication for each of the information packets transmitted in the course of a virtual connection in one of the offering trunks (E1...En), and in which method an identical additional identification, which changes for successive information packet groups, is attached to each of the information packets of an information packet group, and the information packets of an information packet group are transmitted separately via the redundant switching matrixes (KV1, KV2) in the direction of the serving trunk (A1...An) considered for the respective virtual connection, and in which method, after such a transmission via the redundant switching matrixes (KV1, KV2), only one of the information packets belonging to an information packet group is forwarded to the serving trunk (A1...An) considered by means of the additional identification in each case attached to the information packets, characterized in that in each case the information packet is forwarded which is the first one to be transmitted without errors in an information packet group and in that information packets which are transmitted without errors and which follow an information packet which was transmitted with errors are temporarily stored until an information packet transmitted without errors from an in each case slower switching matrix (KV1, KV2), which belongs to the same information packet group as the information packet transmitted with errors, has been forwarded, after which the temporarily stored information packets are forwarded in rapid sequence.

2. Method according to Claim 2, characterized in that a fixed number of successive information packets form an information packet cycle and in that each temporarily stored information packet is forwarded at the latest after a time which corresponds to the minimum transmission period of one information packet cycle.

3. Circuit arrangement for forwarding information packets, which exhibit a packet header designating the respective virtual connection and which are transmitted in accordance with an asynchronous transfer method on offering trunks (E1...En) in the course of virtual connections, via a packet switch (PVE) exhibiting at least two redundant switching matrixes (KV1, KV2) towards serving trunks (A1...An) connected to this packet switch, each of the offering trunks (E1...En) being associated with a handling facility (BHE) which, on the one hand, in each case attaches an additional identification, which changes for successive information packets, to the information packets transmitted via the respective offering trunk (E1...En) and, on the other hand, forms from the information packets, supplemented by the additional identification in each case an information packet group having a number of identical information packets which corresponds to the number of redundant switching matrixes (KV1, Kv2), which are supplied to the redundant switching matrixes (KV1, KV2), and each of the serving trunks (A1...An) being associated with an evaluating device (AWE) which receives information packets transmitted via the redundant switching matrixes (KV1, KV2) and outputs, by means of the additional identification in each case attached to the information packets and, if necessary, the available additional identification currently used for the respective virtual connection in the formation of an information packet group, only one of the information packets belonging to an information packet group, to the associated serving trunk (A1...An), characterized in that information packets which are in each case the first ones to be transmitted without errors in their information packet group are forwarded by the respective evaluating device (AWE), and in that information packets which follow one another following the errored transmission of an information packet are stored in a memory (ZSP), and in that an information packet transmitted without errors by an in each case slower switching matrix (KV1; KV2) and which belongs to the same information packet group as the respective information packet transmitted with errors is forwarded to the respective serving trunk (A1...An), and in that the information packets stored in the memory (ZSP) are forwarded to the respective serving trunk (A1 ...An) in the same order in which they are stored in the memory (ZSP).

4. Circuit arrangement according to Claim 5, characterized in that a number of successive information packets form an information packet cycle and in that each temporarily stored information packet is read out of the memory (ZSP) and forwarded at the latest after a time which corresponds to the minimum transmission period of an information packet cycle.

## Revendications

1. Procédé pour retransmettre des paquets d'informations, qui sont transmis dans des lignes d'arrivée (E1...En) au cours de liaisons virtuelles selon un procédé de transmission asynchrone et qui possèdent une tête de paquet désignant la liaison virtuelle respective, par l'intermédiaire d'un dispositif de commutation de paquets (PVE), qui possède au moins deux multiples de couplage redondant (KV1, KV2), à des lignes de départ (A1...An) reliées à ce dispositif,
selon lequel pour chacun des paquets d'informations transmis dans l'une des lignes d'arrivée (E1...En), au cours d'une liaison virtuelle, un nombre de paquets d'informations identiques, qui correspond au nombre des multiples de couplage redondants (KV1, KV2) est formé par multiplication, et
selon lequel à chacun des paquets d'informations d'un groupe de paquets d'informations est adjointe une caractérisation supplémentaire identique, qui est variable pour des groupes successifs de paquets d'informations, et les paquets d'informations d'un groupe de paquets d'informations sont transmis séparément par l'intermédiaire des multiples de couplage redondants (KV1, KV2) en direction de la ligne de départ (A1...An) intervenant pour la liaison virtuelle respective, et
selon lequel après une telle transmission par l'intermédiaire des multiples de couplage redondants (KV1, KV2), sur la base de la caractérisation supplémentaire adjointe respectivement aux paquets d'informations, seul l'un des paquets d'informations faisant partie d'un groupe de paquets d'informations est retransmis à la ligne de départ (A1...An),
caractérisé par le fait
que respectivement le paquet d'informations, transmis sans erreur en tant que premier paquet d'un groupe de paquets d'informations, est retransmis et
que des paquets d'informations transmis sans erreur, qui succèdent à un paquet d'informations transmis de façon défectueuse, sont mémorisés temporairement jusqu'à ce qu'un paquet d'informations, transmis sans erreur par un multiple de couplage (KV1, KV2) respectivement plus lent et qui fait partie du même groupe de paquets d'informations que le paquet d'informations transmis de façon défectueuse, ait été retransmis, à la suite de quoi les paquets d'informations mémorisés temporairement sont retransmis selon une séquence rapide.

2. Procédé suivant la revendication 1, caractérisé par le fait qu'un nombre fixé de paquets d'informations successifs forme un cycle de paquets d'informations et que chaque paquet d'informations mémorisé temporairement est retransmis au plus tard au bout d'un intervalle de temps qui correspond à la durée minimale de transmission d'un cycle de paquets d'informations.

3. Montage pour la retransmission de paquets d'informations, qui sont transmis dans des lignes d'arrivée (E1...En) au cours de liaisons virtuelles selon un procédé de transmission asynchrone et qui possèdent une tête de paquet désignant la liaison virtuelle respective, par l'intermédiaire d'un dispositif de commutation de paquets (PVE), qui possède au moins deux multiples de couplage (KV1, KV2) redondants, à des lignes de départ (A1...An) reliées à ce dispositif, et dans lequel à chacune des lignes d'arrivée (E1...En) est associé un dispositif de traitement (BHE), qui, d'une part, adjoint respectivement une caractérisation supplémentaire variable pour des paquets d'informations successives, aux paquets d'informations transmis par l'intermédiaire de la ligne d'arrivée respective (E1...En), et, d'autre part, forme, à partir des paquets d'informations complétés par la caractérisation supplémentaire, respectivement un groupe de paquets d'informations comportant un nombre, qui correspond au nombre des multiples de couplage (KV1, KV2) redondants, de paquets d'informations identiques, qui sont envoyés aux multiples de couplage redondants (KV1, KV2), et dans lequel à chacune des lignes de départ (A1...An) est associé un dispositif d'évaluation (AWE), qui reçoit les paquets d'informations transmis par l'intermédiaire des multiples de couplage redondants (KV1, KV2) et, sur la base de la caractérisation supplémentaire respectivement adjointe aux paquets d'informations, et éventuellement de la caractérisation supplémentaire disponible auprès du dispositif de traitement (BHE) précisément lors de sa formation d'un groupe de paquets d'informations pour la liaison virtuelle respective, délivre seulement l'un des paquets d'informations faisant partie d'un groupe de paquets d'informations à la ligne de départ associée (A1...An), caractérisé par le fait que des paquets d'informations qui sont transmis sans erreur respectivement en tant que premiers de leurs groupes de paquets d'informations, sont retransmis par le dispositif d'évaluation respectif (AWE), et que des paquets d'informations, qui se succèdent lors de la transmission défectueuse d'un paquet d'informations, sont mémorisés dans une mémoire (ZSP), et qu'un paquet d'informations, qui est transmis sans erreur par un multiple de couplage (KV1; KV2) plus lent et qui fait partie du même groupe de paquets d'informations que le paquet d'informations respectif transmis de façon défectueuse, est retransmis à la ligne de départ respective (A1...An), et que les paquets d'informations mémorisées dans la mémoire (ZSP), sont retransmis à la ligne respective de départ (A1 ...An), dans la même séquence que celle avec laquelle ils sont mémorisés dans la mémoire (ZSP).

4. Montage suivant la revendication 5, caractérisé par le fait qu'un nombre de paquets d'informations successifs forment un cycle de paquets d'informations, et que chaque paquet d'informations mémorisé temporairement est lu à partir de la mémoire (ZSP) au plus tard au bout d'un intervalle de temps qui correspond à la durée minimale de transmission d'un cycle de paquets d'informations, et est retransmis.
